(19) Europäisches Patentamt
European Patent Office
Office européen des brevets

(11) **EP 2 462 592 B1**

(12) **FASCICULE DE BREVET EUROPEEN**

(45) Date de publication et mention de la délivrance du brevet:
**08.04.2015 Bulletin 2015/15**

(21) Numéro de dépôt: **10752064.5**

(22) Date de dépôt: **21.07.2010**

(51) Int Cl.:
*G21C 3/328* (2006.01)   *G21C 5/02* (2006.01)
*G21C 5/18* (2006.01)   *G21C 3/62* (2006.01)
*G21C 7/117* (2006.01)   *G21C 7/24* (2006.01)

(86) Numéro de dépôt international:
**PCT/FR2010/051538**

(87) Numéro de publication internationale:
**WO 2011/015756 (10.02.2011 Gazette 2011/06)**

(54) **PROCÉDÉ D'EXPLOITATION D'UN RÉACTEUR NUCLÉAIRE À EAU PRESSURISÉE PERMETTANT D'ATTEINDRE UN CYCLE D'ÉQUILIBRE AU PLUTONIUM**

VERFAHREN FÜR DEN BETRIEB EINES DRUCKWASSERKERNREAKTORS ZUR ERZIELUNG EINES PLUTONIUMGLEICHGEWICHTSZYKLUS

METHOD OF OPERATING A PRESSURIZED-WATER NUCLEAR REACTOR FOR REACHING A PLUTONIUM EQUILIBRIUM CYCLE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **06.08.2009 FR 0955530**
**06.08.2009 FR 0955529**

(43) Date de publication de la demande:
**13.06.2012 Bulletin 2012/24**

(73) Titulaire: **Areva NP**
**92400 Courbevoie (FR)**

(72) Inventeurs:
• **HENRAS, Dorothée**
**78150 Le Chesnay (FR)**
• **ZHENG, Song, Hui**
**69680 Chassieu (FR)**

(74) Mandataire: **Jacobson, Claude**
**Cabinet Lavoix**
**2, Place d'Estienne d'Orves**
**75441 Paris Cedex 09 (FR)**

(56) Documents cités:
**US-A- 5 416 813**

• **BARBRAULT P: "A plutonium-fueled high-moderated pressurized water reactor for the next century" NUCLEAR SCIENCE AND ENGINEERING, ACADEMIC PRESS, NEW YORK, NY, US, vol. 122, 1 février 1996 (1996-02-01), pages 240-246, XP009130876 ISSN: 0029-5639**
• **VASILE A ET AL: "Advanced fuels for plutonium management in pressurized water reactors" JOURNAL OF NUCLEAR MATERIALS, ELSEVIER BV, NL LNKD- DOI:10.1016/S0022-3115(03) 00148-X, vol. 319, 1 juin 2003 (2003-06-01), pages 173-179, XP004429003 ISSN: 0022-3115**
• **ANIEL-BUCHHEIT S ET AL: "Plutonium recycling in a full-MOX 900-MW(electric) PWR: physical analysis of accident behaviors" NUCLEAR TECHNOLOGY, AMERICAN NUCLEAR SOCIETY, CHICAGO, IL, US, vol. 128, no. 2, 1 novembre 1999 (1999-11-01), pages 245-256, XP009130860 ISSN: 0029-5450**
• **HYUNG-KOOK JOE ET AL: "Feasibility study on the utilization of mixed oxide fuel in Korean 900 MWe PWR core through conceptual core nuclear design and analysis" JOURNAL OF THE KOREAN NUCLEAR SOCIETY, KOREAN NUCLEAR SOCIETY, SEOUL, KR, vol. 29, no. 4, 1 août 1997 (1997-08-01), pages 299-309, XP009139954 ISSN: 0372-7327**

EP 2 462 592 B1

- FETTERMAN ET AL: "AP1000 core design with 50% MOX loading" ANNALS OF NUCLEAR ENERGY, PERGAMON PRESS, OXFORD, GB LNKD- DOI:10.1016/J.ANUCENE.2008.11.022, vol. 36, no. 3, 1 avril 2009 (2009-04-01), pages 324-330, XP026004615 ISSN: 0306-4549 [extrait le 2009-01-04]

**Description**

La présente invention concerne un procédé d'exploitation d'un réacteur nucléaire.

Le retraitement des assemblages de combustible nucléaire usagés a rendu disponibles des quantités importantes de plutonium.

On a depuis longtemps proposé d'utiliser ce plutonium pour le mélanger avec de l'uranium et ainsi constituer des combustibles nucléaires. Ces combustibles contenant, avant irradiation, un mélange d'oxydes d'uranium et de plutonium sont généralement dénommés combustibles MOX (Mixed Oxide).

Les assemblages contenant de tels combustibles MOX, dénommés assemblages MOX par la suite, ont été chargés dans les coeurs de réacteurs nucléaires où ils coexistent avec des assemblages dont le combustible nucléaire, avant irradiation, ne contient pas d'oxyde de plutonium, mais uniquement de l'oxyde d'uranium. De tels assemblages seront dénommés par la suite assemblages $UO_2$ et le combustible qu'ils contiennent combustible $UO_2$. Un coeur de réacteur nucléaire chargé d'assemblages de combustible MOX et d'assemblages de combustible $UO_2$ sera dénommé par la suite coeur mixte.

Les isotopes du plutonium et ceux de l'uranium présentent des propriétés neutroniques très différentes, et notamment des différences de section efficace.

Considérant que ces différences de propriétés neutroniques rendaient impossible la substitution pure et simple du combustible MOX à du combustible $UO_2$ pour réaliser des assemblages MOX, le document FR-2 693 023 a décrit un assemblage MOX zoné, c'est-à-dire dont les crayons de combustible nucléaire ont une même composition (ou vecteur) isotopique de plutonium, c'est-à-dire la même composition en terme de pourcentages des fractions massiques respectives de chaque isotope constitutif du plutonium, et des teneurs massiques totales nominales en plutonium différentes d'une zone à l'autre de l'assemblage.

Ainsi, la teneur massique totale nominale en plutonium est plus faible sur les faces qu'au centre de l'assemblage, et encore plus faible dans les coins de l'assemblage. Ceci permet d'atteindre une distribution radiale de la puissance linéique dans le coeur du réacteur nucléaire, notamment dans les crayons périphériques des assemblages MOX adjacents à des assemblages $UO_2$, qui soit acceptable.

Par ailleurs, comme rappelé dans ce document, le plutonium issu de retraitement a une composition isotopique qui varie fortement notamment en fonction de l'enrichissement initial en uranium 235, du taux de combustion et de la durée de stockage du combustible avant retraitement.

Afin de pallier les différences de comportement neutronique que pourraient induire de telles différences de compositions isotopiques, des relations d'équivalence énergétique ont été établies afin de déterminer les teneurs massiques totales nominales de plutonium pour différentes compositions isotopiques correspondant à une teneur en uranium 235 de référence. Ces teneurs massiques totales nominales équivalentes permettent de compenser les différences de compositions isotopiques et d'atteindre les mêmes taux de combustion (burn-up en anglais) dans le même type de gestion du combustible. Les relations d'équivalence utilisent des coefficients d'équivalence qui dépendent de la composition isotopique du combustible MOX considéré, c'est-à-dire de la composition isotopique du plutonium et de la teneur en uranium 235 de l'uranium associé au plutonium.

Ces relations d'équivalence sont par exemple évoquées dans les pages 41 à 43 du document intitulé Status and Advances in MOX Fuel Technology, Technical Reports Series no.415 et publié par l'Agence Internationale de l'Energie Atomique en 2003.

A titre d'exemple, le tableau ci-dessous précise dans sa première partie les compositions typiques du plutonium issu du retraitement d'assemblages de combustible $UO_2$ pour réacteur à eau pressurisée en fonction de l'enrichissement initial du combustible en uranium 235, du taux de combustion atteint par le combustible, la durée de stockage avant retraitement étant la même pour tous les exemples cités dans le tableau.

Le tableau précise dans sa seconde partie (dernière ligne) les teneurs massiques totales nominales en plutonium permettant d'atteindre le même taux de combustion qu'un assemblage $UO_2$ enrichi en masse à 3.70% en uranium 235 et donc de compenser la diminution de la qualité du plutonium : réduction de la quantité d'isotopes fissiles (plutonium 239 et plutonium 241) et augmentation de la quantité d'isotopes fertiles absorbants (plutonium 238, plutonium 240, plutonium 242 et américium 241).

| | | Assemblage UO$_2$ pour réacteur à eau pressurisée | | | |
|---|---|---|---|---|---|
| Provenance du Pu mis en œuvre | | enrichi en masse à 3.25% en $^{235}$U et irradié à 30 GWj/tML | enrichi en masse à 3.70% en $^{235}$U et irradié à 40 GWj/tML | enrichi en masse à 4.00% en $^{235}$U et irradié à 50 GWj/tML | enrichi en masse à 4.95% en $^{235}$U et irradié à 70 GWj/tML |
| Composition isotopique (% en masse) | 238Pu | 1,2 | 2,1 | 3,1 | 5,3 |
| | 239Pu | 62,2 | 57,7 | 53,6 | 48,9 |
| | 240Pu | 23,0 | 24,1 | 24,9 | 24,9 |
| | 241Pu | 8,0 | 8,7 | 9,1 | 9,3 |
| | 242Pu | 4,4 | 6,1 | 7,9 | 10,2 |
| | 241Am | 1,2 | 1,3 | 1,4 | 1,4 |
| Teneur massique totale nominale en Pu (%) équivalente à un enrichissement en masse à 3.70% en $^{235}$U | | 6,7 | 7,6 | 8,7 | 10,7 |

Compte tenu des quantités de plus en plus importantes de plutonium disponibles, certains producteurs d'électricité ont souhaité que les nouveaux réacteurs nucléaires construits puissent être chargés jusqu'à 50% d'assemblages MOX.

Le document US-6 233 302 décrit un réacteur nucléaire dans lequel tous les assemblages de combustible nucléaire chargés dans le coeur contiennent du combustible MOX. Afin d'assurer une répartition radiale homogène de la puissance linéique, ces assemblages ont toujours une configuration zonée et comprennent en outre des crayons de combustible nucléaire qui ne contiennent pas d'oxyde de plutonium et dont le combustible nucléaire contient, en plus des impuretés inévitables résultant de la fabrication, des poisons neutroniques consommables tel que de l'oxyde d'erbium.

Toutefois, ce réacteur ne permet pas une utilisation optimale du plutonium et ces assemblages sont complexes et coûteux à réaliser.

Les articles Barbault P : « A plutonium-fueled high-moderated pressurized water reactor for the next century », Nuclear science and engineering, Academic press, New York, vol. 122, 1 février 1996, pages 240 à 246, Vasile et al : « Advanced fuels for plutonium management in pressurized water reactors », Journal of nuclear materials, Elsevier BV, vol. 319, 1 juin 2003, pages 173 à 179, Aniel Buchheit S et al. : "Plutonium recycling in a full MOX 900 MW (electric) PWR : physical analysis of accident behaviour », Nuclear Technology, Américain nuclear society, Chicago, vol. 128, no. 2, 1 Novembre 1999, pages 245 à 256 et Hyung-Kook Joe et al: « Feasability study on the utilization of mixed oxide fuel in Korean 900MWe PWR core through conceptual nuclear core design and analysis », Journal of the Korean Nuclear Society, vol. 29, no. 4, 1 août 1997, pages 299 à 309 décrivent des coeurs de réacteurs nucléaires chargés à 100% d'assemblages MOX.

Un but de l'invention est de résoudre ce problème en fournissant un procédé d'exploitation d'un réacteur nucléaire à eau pressurisée, procédé utile pour pouvoir utiliser plus de plutonium avec une efficacité accrue et des coûts plus réduits.

A cet effet, l'invention a pour objet un procédé selon la revendication 1.

Selon des modes particuliers de réalisation, le procédé peut comprendre l'une ou plusieurs des caractéristiques des revendications 2 à 15, prise(s) isolément ou selon toutes les combinaisons techniquement possibles.

L'invention sera mieux comprise à la lecture de la description qui va suivre, donnée uniquement à titre d'exemple, et faite en se référant aux dessins annexés, sur lesquels :

- la figure 1 est une vue schématique illustrant un réacteur nucléaire à eau pressurisée,
- la figure 2 est une vue schématique de dessus montrant une répartition possible des assemblages de combustible nucléaire et des grappes de commande dans le coeur du réacteur nucléaire de la figure 1,
- la figure 3 est une vue schématique latérale d'un assemblage de combustible nucléaire du coeur du réacteur nucléaire de la figure 1,
- la figure 4 est une vue schématique de dessus illustrant une répartition possible des crayons de combustible nucléaire dans l'assemblage de la figure 3,
- la figure 5 est une vue schématique en coupe longitudinale d'un crayon de combustible de l'assemblage de la figure 3,
- la figure 6 est vue schématique partielle en coupe longitudinale d'une grappe de commande du réacteur nucléaire de la figure 1,
- la figure 7 est un schéma représentant une installation de refroidissement du réacteur nucléaire de la figure 1 lorsque le coeur est à l'arrêt,
- les figures 8 à 12 sont des vues schématiques partielles et de dessus du coeur du réacteur de la figure 1 montrant les répartitions successives des assemblages de combustible nucléaire lors du démarrage du réacteur pour atteindre un cycle d'équilibre au plutonium,
- la figure 13 est une vue analogue à la figure 4 illustrant un assemblage de combustible nucléaire initial utilisable lors du démarrage du coeur du réacteur de la figure 1 pour atteindre un cycle d'équilibre au plutonium,
- la figure 14 est une vue analogue à la figure 8 illustrant un autre cycle initial permettant d'atteindre un cycle d'équilibre au plutonium,
- la figure 15 est une vue analogue à la figure 13 illustrant un assemblage de combustible nucléaire de transition utilisable lors du passage d'un cycle d'équilibre au plutonium à un cycle d'équilibre à l'uranium,
- la figure 16 est une vue analogue aux figures 8 à 14 illustrant un cycle d'équilibre à l'uranium,
- les figures 17 et 18 sont des vues comparant les puissances linéiques atteintes au sein d'assemblages de combustible nucléaire lors du passage d'un cycle d'équilibre au plutonium à un cycle d'équilibre à l'uranium avec ou sans l'utilisation d'un assemblage selon la figure 15.

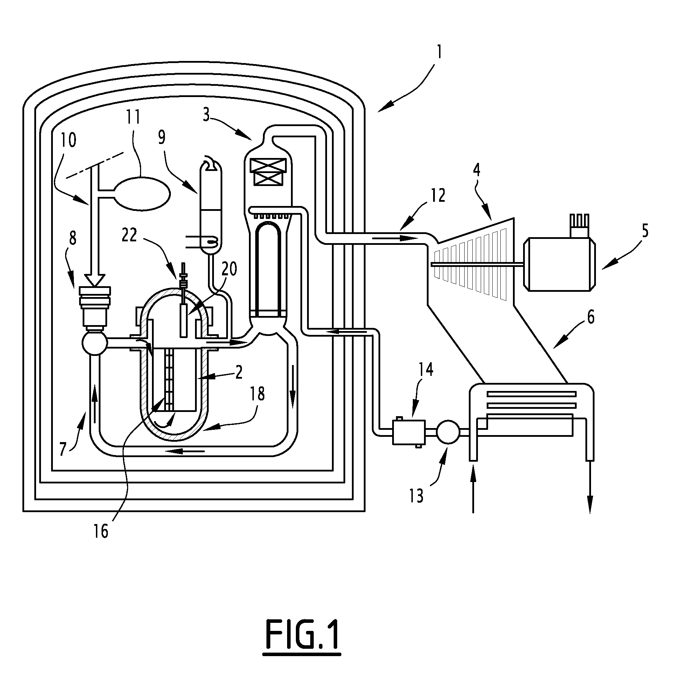

La figure 1 illustre schématiquement un réacteur nucléaire 1 à eau pressurisée qui comprend classiquement un coeur 2, et un ou plusieurs de chacun des éléments ci-dessous, un seul de chacun de ces éléments étant représenté sur la figure 1 :

- un générateur de vapeur 3,
- une turbine 4 couplée à un générateur 5 d'énergie électrique, et
- un condenseur 6.

Le réacteur nucléaire 1 comprend un réflecteur lourd (non représenté). Le réacteur nucléaire 1 comprend en outre un circuit primaire 7 équipé de pompes 8 et dans lequel circule de l'eau sous pression, selon le trajet matérialisé par les flèches sur la figure 1. Cette eau remonte notamment au travers du coeur 2 pour y être réchauffée en assurant la réfrigération et la modération dans le coeur 2.

Le circuit primaire 7 comprend en outre un pressuriseur 9 permettant de réguler la pression de l'eau circulant dans le circuit primaire 7.

Un circuit 10 dit réseau d'appoint d'eau ou encore REA est raccordé au circuit primaire 7, par exemple via la pompe 8, afin d'alimenter en eau le circuit primaire 7. Le circuit 10 comprend par exemple des réservoirs 11 contenant du bore soluble, par exemple sous forme d'acide borique $H_3BO_3$. Le circuit REA 10 permet ainsi d'introduire du bore dans l'eau du circuit primaire 7 et donc de diminuer la réactivité dans le coeur 2. De préférence, le bore contenu dans le réservoir 11 est enrichi en bore 10, par exemple pour que sa teneur atomique en cet isotope soit supérieure à 40 % et soit par exemple d'environ 50 %. On rappelle que la teneur atomique en isotope 10 du bore naturel est d'environ 20 %.

L'eau du circuit primaire 7 alimente également le générateur de vapeur 3 où elle est refroidie en assurant la vaporisation d'eau circulant dans un circuit secondaire 12.

La vapeur produite par le générateur de vapeur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le coeur 2 comprend des assemblages 16 de combustible nucléaire qui sont chargés dans une cuve 18. Un seul assemblage 16 est représenté sur la figure 1, mais le coeur 2 comprend par exemple 241 assemblages 16.

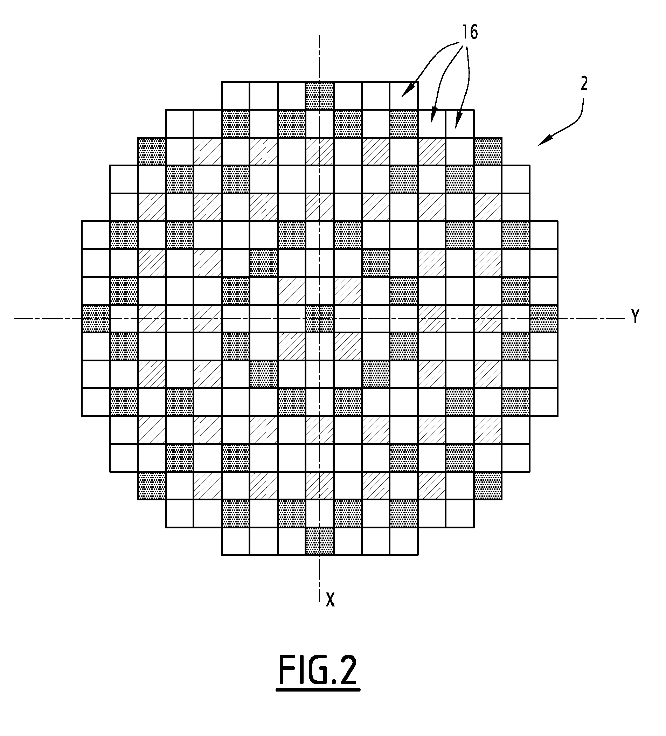

La figure 2 montre en vue de dessus un exemple de répartition de ces différents assemblages 16 au sein du coeur 2. Chaque carré y matérialise un assemblage 16.

Classiquement, lors de l'exploitation du réacteur 1, celui-ci fonctionne pendant des cycles successifs qui sont séparés par des étapes de remplacement au cours desquelles les assemblages 16 usés sont remplacés par des assemblages 16 frais et les assemblages 16 restant dans le coeur 2 peuvent changer de position.

Le réacteur 1 comprend des grappes de commande 20 (figure 1) qui sont disposées dans la cuve 18 au-dessus de certains assemblages 16. Une seule grappe 20 est représentée sur la figure 1, mais le coeur 2 peut comprendre par exemple 89 grappes 20.

Les grappes 20 peuvent être déplacées par des mécanismes 22 pour venir s'insérer dans les assemblages 16 qu'elles surplombent ou en être extraites.

Classiquement, chaque grappe de commande 20 comprend des crayons absorbants qui comportent un ou plusieurs matériaux absorbant les neutrons et éventuellement des crayons inertes, c'est-à-dire qui n'ont pas de capacité spécifique d'absorption des neutrons.

Ainsi, le déplacement vertical des grappes 20 permet de régler la réactivité dans le coeur 2 et autorise des variations de la puissance globale P fournie par le coeur 2 depuis la puissance nulle jusqu'à la puissance nominale PN, en fonction de l'enfoncement des grappes de commande 20 dans les assemblages 16.

Certaines de ces grappes de commande 20 sont destinées à assurer la régulation du fonctionnement du coeur 2, par exemple en puissance ou en température, et sont dénommées grappes de contrôle. D'autres sont destinées uniquement à l'arrêt du réacteur 1 et sont dénommées grappes d'arrêt. Dans l'exemple représenté, le réacteur nucléaire 1 comprend 40 grappes de contrôle et 49 grappes d'arrêt. Les assemblages 16 surmontés d'une grappe de contrôle sont repérés par des hachures et ceux surmontés d'une grappe d'arrêt par des points sur la figure 2.

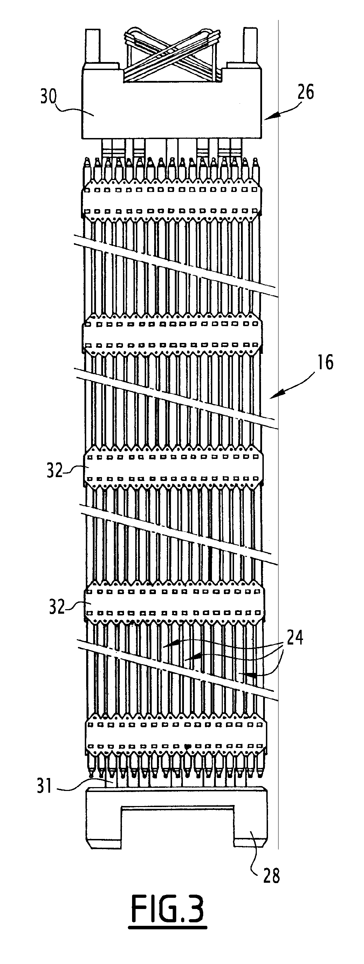

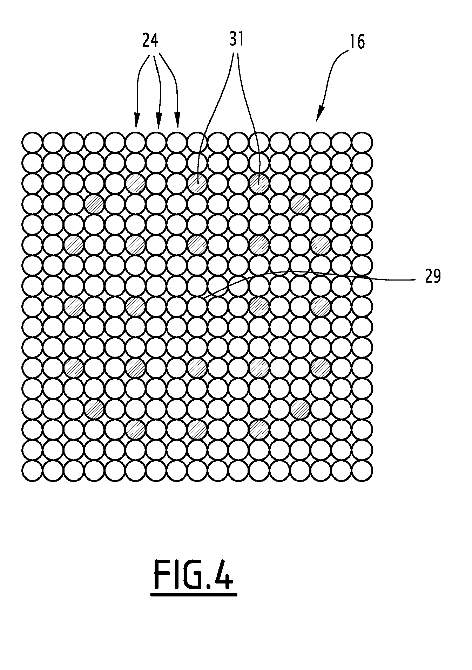

Comme illustré par les figures 3 et 4, chaque assemblage 16 comprend de manière classique un faisceau de crayons de combustible nucléaire 24 et un squelette 26 de support des crayons 24.

Le squelette 26 comprend classiquement un embout inférieur 28, un embout supérieur 30, des tubes-guides 31 reliant les deux embouts 30 et 28 et destinés à recevoir des crayons des grappes de commande 20, et des grilles entretoises 32.

La figure 4 montre la répartition des crayons de combustible nucléaire 24 dans un assemblage 16 selon l'exemple décrit. Les crayons de combustible nucléaire 24 et les tubes-guides 31 y forment un réseau à base carrée de 17 crayons de côté. L'assemblage 16 comprend ainsi par exemple 24 tubes-guides 31 et 265 crayons de combustible nucléaire 24. Les noeuds du réseau sont de préférence occupés chacun par un crayon de combustible nucléaire 24, par un tube-guide 31, et éventuellement par un tube d'instrumentation 29 qui remplace un crayon de combustible nucléaire 24 au centre de l'assemblage 16. Ainsi, tous les noeuds du réseau sont occupés par un crayon de combustible nucléaire 24, un tube d'instrumentation 29 ou un tube-guide 31 et les assemblages 16 ne comportent donc pas de trou d'eau dans leur réseau.

L'assemblage 16 étant destiné à un réacteur à eau pressurisée, il ne comprend pas de boîtier extérieur entourant les crayons de combustible nucléaire 24, comme les assemblages 16 pour réacteur à eau bouillante où ce boîtier canalise l'eau et la vapeur de modération. Dans un tel assemblage 16 pour réacteur à eau pressurisée, la zone de plus forte modération ne se situe pas entre deux assemblages adjacents, mais autour des tubes-guides.

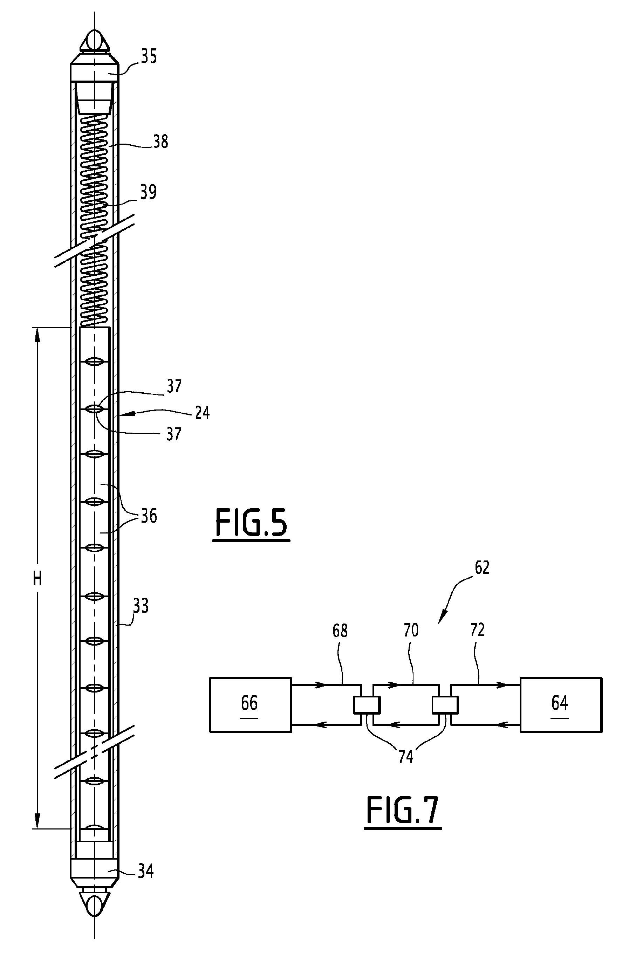

Comme illustré par la figure 5, chaque crayon de combustible nucléaire 24 comprend de manière classique, une gaine 33 sous forme d'un tube circulaire fermé par un bouchon inférieur 34 et un bouchon supérieur 35. Le crayon 24 renferme le combustible nucléaire conditionné par exemple sous forme d'une série de pastilles 36 empilées dans la gaine 33 et prenant appui contre le bouchon inférieur 34. Un ressort de maintien 39 est disposé dans le tronçon supérieur de la gaine 33 pour prendre appui sur le bouchon supérieur 35 et sur la pastille 36 supérieure.

Les pastilles 36 peuvent comporter des évidements 37 en forme de calottes sphériques. De préférence, ces pastilles 36 sont néanmoins pleines et ne comportent donc pas, par exemple, de passage traversant leur conférant une forme annulaire.

Classiquement, la gaine 33 est en alliage de zirconium.

Selon un mode d'exploitation préféré du réacteur de la figure 1, le combustible nucléaire utilisé dans tous les crayons 24 des assemblages 16 est un même combustible MOX.

Le réacteur 1 fonctionne alors selon des cycles successifs qualifiés par la suite de cycles d'équilibre au plutonium et les assemblages 16 utilisés lors d'un tel cycle seront qualifiés d'assemblages 16 d'équilibre au plutonium.

Pour une même composition isotopique, tous les crayons 24 ont une même teneur massique totale nominale en Pu. Ainsi, hormis les différences résultant nécessairement de la fabrication, tous les crayons 24 ont exactement la même teneur massique totale en Pu. Cette teneur massique totale est définie comme étant le rapport entre la masse totale (Pu+Am) dans le combustible nucléaire et la masse totale des isotopes lourds (U+Pu+Am), en pour-cent. De manière conventionnelle, cette teneur massique totale est actuellement inférieure à une teneur limite de 13 % et par exemple égale à environ 7 % ou 10 %. Pour une composition isotopique donnée, les incertitudes résultant de la fabrication peuvent conduire à des différences relatives de teneurs D variant dans une plage de + ou - 5%, la différence relative D étant définie par :

$$D(\%) = \frac{(\text{teneur réelle - teneur nominale})}{\text{teneur nominale}}$$

De préférence, aucun crayon 24 ne contient de poison neutronique consommable, tels que des oxydes de terres rares par exemple, hormis les impuretés inévitables résultant de la fabrication.

Un espace 38 d'expansion des gaz produits lors de l'irradiation du combustible nucléaire est délimité à l'intérieur de la gaine 33 par le combustible nucléaire, le bouchon inférieur 34, le bouchon supérieur 35 et le ressort 39.

Les espaces d'expansion 38 ont de préférence des volumes V qui sont ajustés pour tenir compte du dégagement plus important de gaz de fission lors de l'irradiation du combustible MOX par rapport à un combustible $UO_2$ qui serait irradié dans les mêmes conditions.

Par ailleurs, des mesures spécifiques peuvent être prises afin d'accroître le volume des espaces d'expansion 38 telles que l'utilisation de cales ou la présence de bouchons inférieurs 34 de forme spécifique tels que décrits dans FR-2 864 322.

Le coeur 2 a de préférence une puissance nominale linéique PNlin inférieure à 175 W/cm et de préférence encore inférieure à 170 W/cm.

La puissance nominale linéique est définie par :

$$PNlin = \frac{PN}{N * H}$$

où PN est la puissance nominale du coeur 2, N le nombre de crayons de combustible nucléaire 24 présents dans le coeur 2 et H la hauteur de combustible nucléaire (encore dénommée hauteur de colonne fissile), c'est-à-dire la hauteur de l'empilement de pastilles 36 (voir fig. 5).

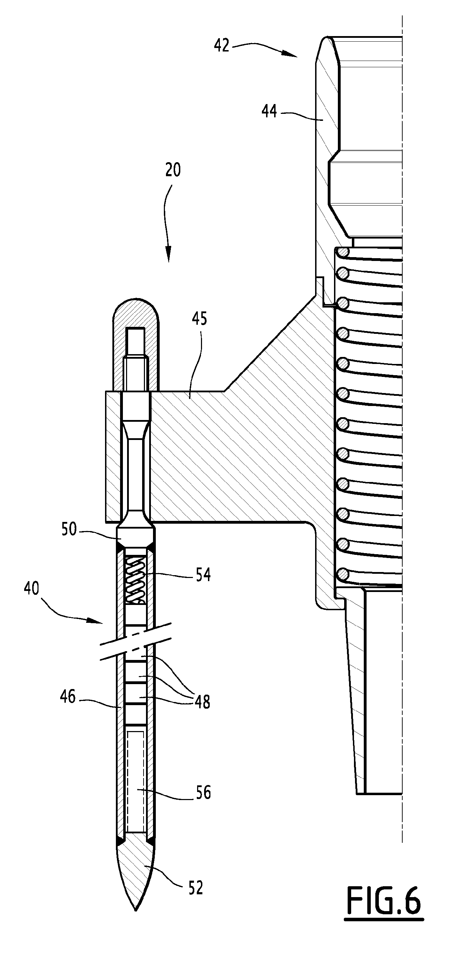

La figure 6 illustre la structure d'une grappe de commande 20. Cette grappe de commande 20 comporte des crayons absorbants 40 et une araignée 42 assurant le support et le maintien des crayons absorbants 40 sous la forme d'un faisceau dans lequel les crayons absorbants 40 sont parallèles entre eux et positionnés latéralement suivant le même réseau que celui des tubes-guides 31 de l'assemblage 16 correspondant.

L'araignée 42 comporte par exemple un pommeau 44 permettant de raccorder la grappe de commande 20 au mécanisme de déplacement 22 correspondant et des ailettes 45 solidaires du pommeau 44 sur chacune desquelles sont fixés un ou plusieurs crayons absorbants 40.

Le crayon absorbant 40 représenté sur la figure 6 comporte un tube 46 renfermant un empilement de pastilles 48 en carbure de bore $B_4C$. Le tube 46 est fermé, à son extrémité supérieure, par un bouchon 50 et, à son extrémité inférieure, par un bouchon 52 en forme d'ogive. Le tube 46 et les bouchons 50 et 52 sont par exemple réalisés en acier et ont éventuellement été soumis à un traitement contre l'usure tels qu'une nitruration, une oxydation...

L'empilement de pastilles 48 en $B_4C$ est maintenu à l'intérieur du tube 46 par un ressort ou tout autre dispositif bloquant 54. Dans l'exemple représenté, l'extrémité inférieure de la colonne de pastilles 48 est en appui, par l'intermédiaire d'une entretoise 56, sur le bouchon inférieur 52. L'entretoise 56 peut par exemple être réalisée en alliage Argent-Indium-Cadmium (AIC). Les bouchons supérieur 50 et inférieur 52 ont été soudés au tube 46, par exemple, par un faisceau laser, faisceau d'électrons, TIG, friction ou résistance.

Dans une variante préférée, le bore contenu dans les pastilles 48 est enrichi en bore 10, par exemple à une teneur atomique supérieure à 30%, de préférence encore supérieure à 40 %, et par exemple de 50%.

Dans une variante préférée, le réacteur 1 comprend une installation auxiliaire 62 de refroidissement illustrée par la figure 7. Cette installation auxiliaire 62 sert notamment au refroidissement du coeur 2 lorsqu'il est à l'arrêt, au refroidissement des piscines d'entreposage ou de stockage du combustible.... L'installation de refroidissement 62 permet de relier thermiquement des éléments 64 du réacteur 1, dont un seul est représenté sur la figure 7, à une source froide 66. L'élément 64 peut être par exemple la piscine du bâtiment combustible, une pompe, une barrière thermique. La source froide 66 peut être constituée par exemple par un cours d'eau ou la mer ou un aéroréfrigérant.

L'élément 64 et la source froide 66 sont reliés thermiquement dans l'exemple représenté par un circuit extérieur 68 qui est par exemple le circuit dit d'eau brute de sauvegarde ou encore SEC, un circuit intermédiaire 70 qui est par exemple le circuit dit de refroidissement intermédiaire ou RRI et un circuit intérieur 72, les circuits 68, 70 et 72 sont mis en relation thermique les uns les autres par des échangeurs de chaleur 74 qui sont de préférence des échangeurs à plaques.

Lors d'un cycle d'équilibre au plutonium mentionné précédemment, le coeur 2 est chargé à 100% en combustible MOX, de sorte que la quantité de plutonium consommée par le coeur 2 est supérieure à celle consommée par les réacteurs de l'état antérieur de la technique.

L'utilisation d'une teneur massique totale unique en plutonium permet, lorsque l'on compare avec des assemblages MOX zonés selon l'état de la technique, de charger plus de plutonium dans le coeur 2 et/ou de garantir une marge supplémentaire par rapport à la teneur limite autorisée.

Du fait de la teneur homogène en plutonium au sein du coeur 2 et de la lente décroissance de la réactivité du combustible MOX en fonction de l'irradiation, la dispersion radiale de la puissance linéique autour de la valeur moyenne est faible et la puissance est donc bien homogène radialement au sein du coeur 2. On constate également une plus grande stabilité de la distribution axiale de la puissance dans le coeur 2 du fait d'une plus faible efficacité du xénon en environnement 100% MOX.

Grâce à la faible puissance nominale linéique PNlin, le réacteur 1 permet de disposer de marges de sûreté accrues pouvant être utilisées pour augmenter la flexibilité de la gestion du coeur 2 ainsi que de marges sur la pression à l'intérieur des crayons 24 autorisant ainsi des taux de combustion (en anglais burn-up) et des durées de cycle d'irradiation plus élevés. Ceci permet d'accroître encore les performances du combustible MOX utilisé et de les amener au niveau de celles de combustible $UO_2$ dans un coeur 100% $UO_2$.

Ainsi, le taux de combustion pour les assemblages 16 du coeur 2 décrit ci-dessus peut atteindre 50 GWj/tML (GigaWatt.jour par tonne de Métal Lourd, en anglais GWd/tHM) voire 60 GWj/tML et plus. Ces performances peuvent être obtenues tout en maîtrisant la pression interne dans les crayons en ajustant les volumes V des espaces d'expansion 38 pour tenir compte des caractéristiques du combustible MOX, seul présent dans le coeur 2, sans qu'il soit nécessaire de prendre en compte des caractéristiques d'un autre combustible comme dans l'état de la technique.

Il est à noter que cette puissance linéique faible va à l'encontre de la tendance actuelle à augmenter cette puissance.

L'absence de crayons d'eau dans les assemblages 16 d'équilibre au plutonium permet également d'avoir une structure totalement analogue à celle d'assemblages $UO_2$, ce qui permet encore de réduire les coûts associés au coeur 2 grâce à une plus grande standardisation. Cette absence de crayons d'eau permet de plus de conserver une puissance nominale linéique faible et donc de conserver des marges de sûreté accrues.

L'utilisation d'une teneur massique totale unique en plutonium permet également de réduire les coûts grâce à une plus grande standardisation et l'absence de poisons neutroniques évite des mesures spécifiques et coûteuses de fabrication et de retraitement ainsi qu'une perturbation de la nappe de puissance du réacteur due à l'épuisement progressif de ces poisons neutroniques en cours d'irradiation.

Dans certaines variantes, la teneur massique totale nominale en plutonium et/ou les compositions isotopiques du combustible nucléaire pourront varier entre les assemblages 16 présents dans le coeur 2 au cours d'un même cycle d'équilibre au plutonium.

Dans ces variantes, ces teneurs différentes ne sont pas nécessairement équivalentes l'une à l'autre et la composition isotopique du combustible des assemblages 16 considérés peut même être identique.

Grâce à l'enrichissement en bore 10 du bore contenu dans les grappes de commande 20 et du bore soluble introduit dans le circuit primaire 7, les marges d'arrêt et les critères de sûreté peuvent être plus facilement respectés malgré le comportement neutronique spécifique du combustible MOX, notamment son spectre neutronique. La concentration totale en bore dans le circuit primaire 7 reste ainsi acceptable vis-à-vis des spécifications de la chimie du primaire et il n'y a pas de risque de cristallisation.

L'utilisation d'échangeurs à plaques 74 dans l'installation auxiliaire de refroidissement 62 permet en outre, si nécessaire, de compenser la chaleur résiduelle plus importante du combustible MOX.

Ainsi, le coeur 2 présente des marges de fonctionnement et de sûreté accrues dans les situations normales et accidentelles de l'exploitation du réacteur 1 et permet de consommer plus de plutonium avec une efficacité accrue.

Pour atteindre les meilleures performances, il convient d'utiliser une puissance nominale linéique du coeur faible, de ne pas avoir de trou d'eau dans les assemblages 16 d'équilibre au plutonium, de ne pas avoir de poison neutronique dans les crayons de combustible nucléaire utilisés, d'utiliser du bore enrichi dans les grappes de commande 20 et dans les circuits d'alimentation en bore du circuit primaire 7, d'avoir des espaces d'expansion 38 de volume optimisé et d'utiliser, si nécessaire des échangeurs à plaques 74, comme décrit ci-dessus.

Cela étant, dans certaines variantes, toutes ces caractéristiques ou l'une ou l'autre peuvent être absentes. A titre d'exemple, plutôt qu'un enrichissement en bore 10 du $B_4C$ contenu dans les grappes on peut utiliser par exemple un nombre de grappes de commande 20 plus important ou conserver le nombre de grappes de commande 20 et modifier leur répartition entre grappes de contrôle et grappes d'arrêt.

De même les assemblages 16 peuvent avoir des structures et/ou des caractéristiques différentes de celles décrites ci-dessus et notamment comprendre un nombre de crayons de combustible nucléaire 24 différents.

Les grappes de commande 20 décrites précédemment peuvent également être utilisées dans des réacteurs dont les coeurs sont chargés classiquement, c'est-à-dire avec des assemblages MOX classiques et/ou des assemblages $UO_2$.

Le réacteur 1 décrit ci-dessus peut démarrer avec un coeur 2 chargé à 100% en assemblages MOX.

Cela étant, il apparaît économiquement plus avantageux de démarrer le réacteur 1 avec un coeur 2 chargé en partie voire à 100% en assemblages $UO_2$ et de passer au cours d'un cycle ultérieur ensuite à un coeur 2 chargé à 100% en assemblages MOX.

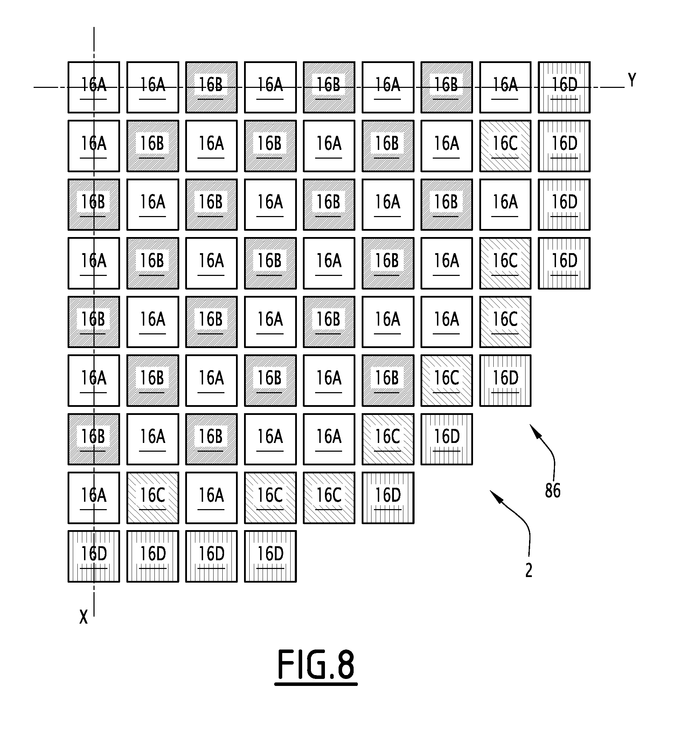

Ainsi, et à titre d'exemple uniquement, les étapes d'un procédé d'exploitation permettant de démarrer le réacteur 1 avec un coeur 2 chargé en partie d'assemblages $UO_2$ et d'atteindre un cycle d'équilibre au plutonium sont décrites par référence aux figures 8 à 12.

Ce procédé d'exploitation du réacteur 1 comprend ainsi un cycle initial et plusieurs cycles de transition qui permettent d'arriver à un cycle d'équilibre au plutonium qui peut être suivi d'un nombre quelconque de tels cycles d'équilibre au plutonium.

Les figures 8 à 12 illustrent respectivement les configurations du coeur 2 correspondant au cycle initial, aux cycles de transition, trois dans l'exemple décrit, et au cycle d'équilibre au plutonium. Entre chaque cycle, le procédé comprend des étapes de remplacement d'assemblages de combustible nucléaire usés par des assemblages de combustible nucléaire frais. Du fait de la symétrie du coeur 2 par rapport à des axes horizontaux X et Y, seul un quart de la structure du coeur 2 a été représentée sur les figures 8 à 13.

A titre d'exemple, dans le cycle initial, le coeur 2 est chargé d'assemblages de combustible nucléaire dits initiaux qui peuvent être par exemple répartis en quatre catégories :

- des assemblages de combustible nucléaire initiaux16A, ces assemblages étant des assemblages $UO_2$ qui contiennent de l'uranium enrichi en masse par exemple à 2,1% en uranium 235, le nombre d'assemblages 16A étant par exemple 97,
- des assemblages de combustible nucléaire initiaux 16B, ces assemblages étant des assemblages $UO_2$ qui contiennent de l'uranium enrichi en masse à une valeur supérieure à celle des assemblages 16A, par exemple à 3,2% en uranium 235, le nombre d'assemblages 16B étant par exemple 72,

- des assemblages de combustible nucléaire initiaux 16C, ces assemblages étant des assemblages $UO_2$ qui contiennent de l'uranium enrichi en masse à une valeur supérieure à celle des assemblages 16B, par exemple à 4,2% en uranium 235, le nombre d'assemblages 16C étant par exemple 32, et
- des assemblages de combustible nucléaire initiaux 16D qui sont des assemblages MOX, le nombre d'assemblages 16D étant par exemple 40.

Les crayons de combustible nucléaire 24 des assemblages 16A à 16C ne contiennent donc pas, avant irradiation, de plutonium. Certains des assemblages de combustible nucléaire initiaux 16A à 16C peuvent comprendre des crayons de combustible nucléaire 24 contenant avant irradiation un poison neutronique consommable, tel que de l'oxyde de gadolinium.

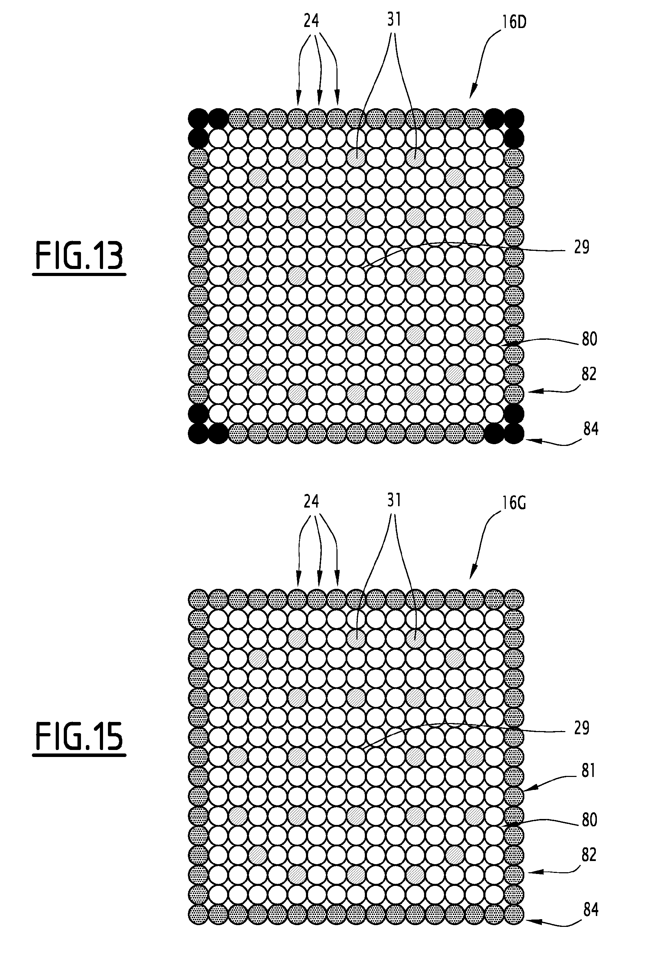

La structure des assemblages initiaux 16D est illustrée par la figure 13.

Cette structure est zonée de sorte que le combustible nucléaire MOX utilisé varie entre différentes zones de l'assemblage 16D. Afin de distinguer ces différents combustibles nucléaires MOX, on utilisera dans la suite de la description la teneur en isotopes fissiles du plutonium t qui est définie comme le rapport entre la masse totale d'isotopes fissiles (Pu239 et Pu241) et la masse totale des isotopes lourds (U + Pu + Am), en %. La réactivité d'un assemblage de combustible MOX est fonction de la teneur t et de la composition isotopique du plutonium utilisé. D'autres paramètres comme par exemple la teneur massique totale en plutonium peuvent être utilisés.

Dans l'exemple décrit, le plutonium utilisé a la même composition isotopique, et l'assemblage 16D comprend :

- une première zone centrale 80 constituée de crayons de combustible nucléaire 24 ayant une première teneur nominale en isotopes fissiles t1, par exemple de 4.6% ce qui correspond à une teneur massique totale nominale en plutonium de 6,3% dans l'exemple considéré, et
- une deuxième zone 82 s'étendant le long des faces extérieures de l'assemblage de combustible nucléaire 16D et constituée de crayons de combustible nucléaire 24 ayant une deuxième teneur nominale en isotopes fissiles t2 strictement inférieure à la première teneur t1, la teneur t2 valant par exemple 3.4% ce qui correspond à une teneur massique totale nominale en plutonium de 4,6% dans l'exemple considéré,
- une troisième zone 84 disposée aux coins de l'assemblage de combustible nucléaire 16D et constituée de crayons de combustible nucléaire 24 ayant une troisième teneur nominale en isotopes fissiles t3 strictement inférieure à la deuxième teneur t2, la teneur t3 valant par exemple 2% ce qui correspond à une teneur massique totale nominale en plutonium de 2,7% dans l'exemple considéré.

Dans l'exemple décrit, la troisième zone 84 comprend 12 crayons 24.

Dans une variante non illustrée, l'assemblage 16D peut ne comprendre que deux zones, l'une correspondant à la zone 80 précédemment décrite et la seconde à la réunion des zones 82 et 84 précédemment décrites où, dans cette variante, les crayons 24 sont identiques.

La teneur massique moyenne nominale en plutonium des assemblages 16D est dans l'exemple considéré de 5,7%. Elle est plus généralement sensiblement supérieure à l'enrichissement en uranium 235 des assemblages de combustible nucléaire 16C, qui est de 4.2% dans l'exemple décrit, pour obtenir l'équivalence énergétique.

Comme illustré par la figure 8, les assemblages 16D sont positionnés dans la couche périphérique extérieure d'assemblages 86 du coeur 2.

La présence des assemblages 16D dans la couche périphérique extérieure 86 permet de limiter le nombre d'interfaces entre du combustible MOX et du combustible $UO_2$ et donc de limiter les valeurs atteintes par le facteur $F\Delta H$ d'élévation d'enthalpie du crayon le plus chaud du coeur 2.

Dans l'étape de remplacement précédant le premier cycle de transition, on introduit :

- par exemple 24 assemblages de combustible nucléaire 16E de transition qui ne contiennent que du combustible $UO_2$, éventuellement avec certains crayons 24 contenant un poison neutronique consommable, tel que de l'oxyde de gadolinium, et
- par exemple 56 assemblages de combustible nucléaire 16F qui contiennent du combustible MOX.

Les assemblages 16E contiennent par exemple de l'uranium enrichi en masse à 4,8% en uranium 235.

Bien que ces solutions soient moins avantageuses économiquement, on peut charger à la place des assemblages 16E des assemblages de combustible nucléaire de transition ne contenant que du combustible MOX avec une teneur nominale en isotopes fissiles t inférieure à celle des assemblages 16F ou des assemblages MOX zonés.

Les assemblages 16F sont par exemple des assemblages ne contenant que du combustible MOX et sont par exemple identiques aux assemblages qui seront utilisés dans les cycles ultérieurs d'équilibre au plutonium. Dans l'exemple considéré, la teneur nominale en isotopes fissiles de leur combustible MOX est par exemple de 5.4% ce qui correspond, toujours dans l'exemple considéré, à une teneur massique totale nominale en plutonium de 7,3%.

On observera que, dans cet exemple, la teneur nominale en isotopes fissiles t des assemblages de combustible nucléaire 16F est supérieure à celle des zones centrales 80 des assemblages de combustible nucléaire 16D.

Pour charger les assemblages 16E et 16F dans le coeur 2 au cours de l'étape de remplacement précédant le premier cycle de transition, on décharge des assemblages de combustible nucléaire 16A.

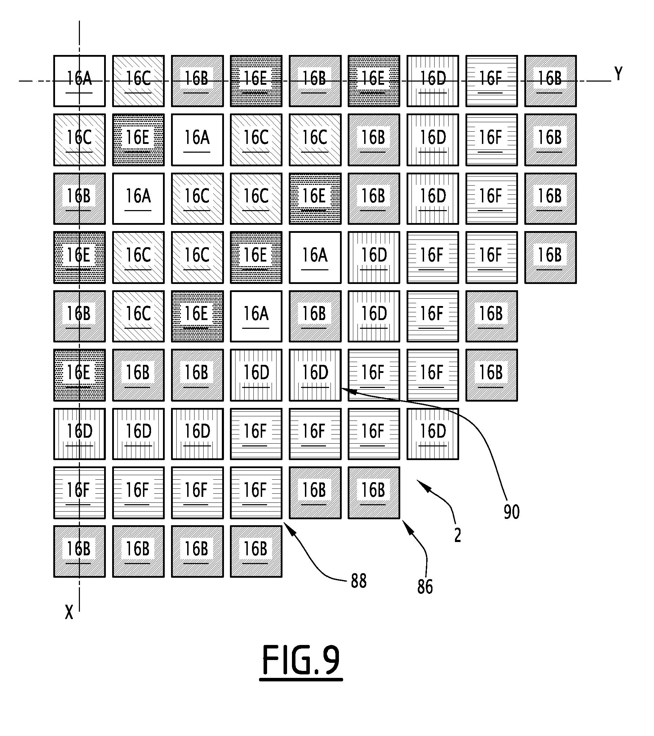

Comme illustré par la figure 9, les assemblages 16F sont chargés dans la couche d'assemblages 88 du coeur 2 immédiatement adjacente à la couche périphérique 86. Les assemblages 16D sont déplacés vers la couche d'assemblages 90 du coeur 2 située immédiatement à l'intérieur du coeur 2 par rapport à la couche 88.

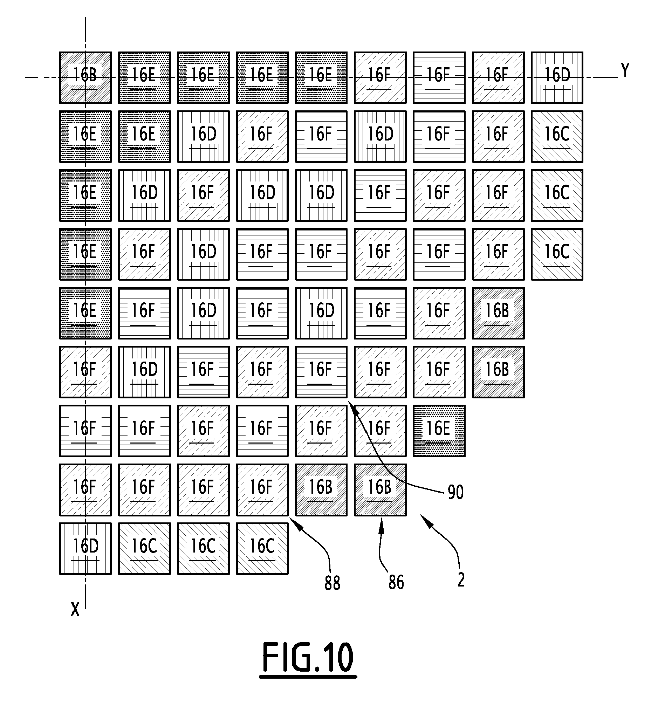

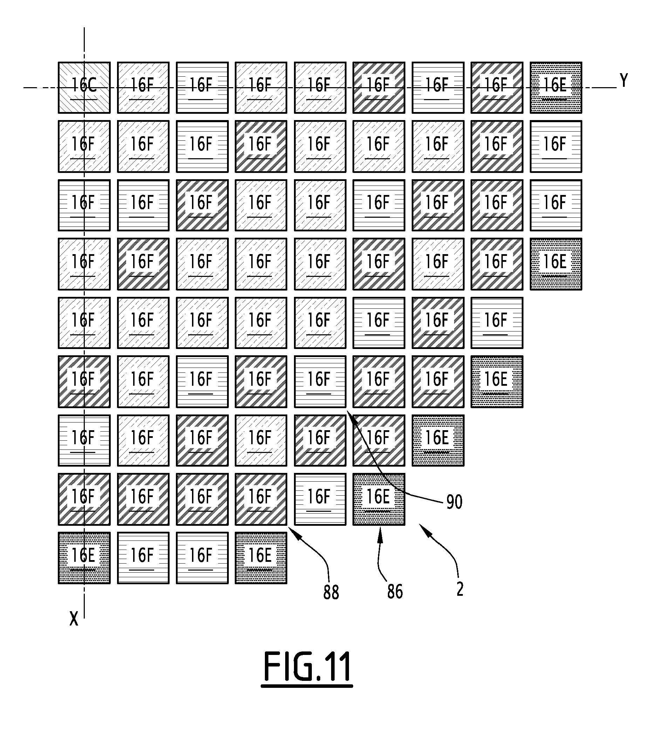

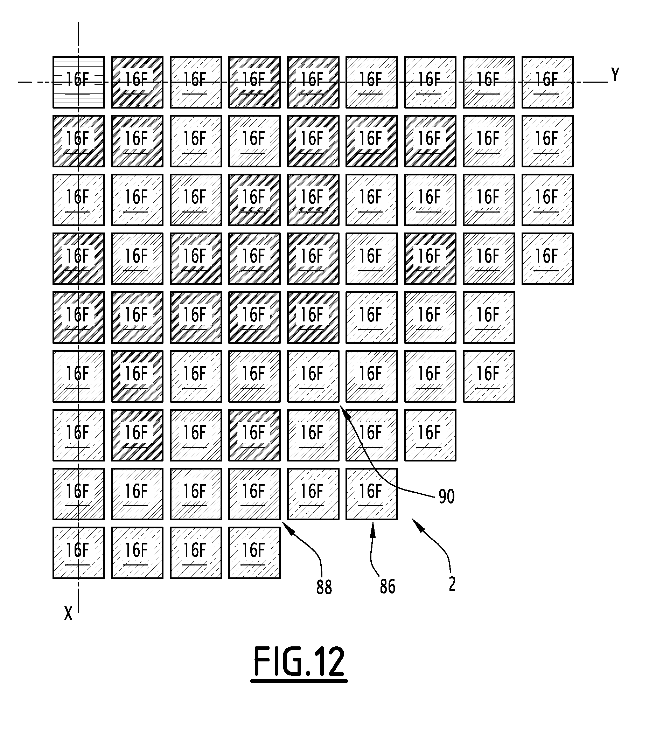

Dans les étapes de remplacement précédant les deuxième (fig. 10) et troisième (fig. 11) cycles de transition et le cycle d'équilibre (fig. 12), on charge des assemblages de combustible nucléaire 16F pour remplacer progressivement les assemblages de combustible nucléaire 16A à 16D. Ces assemblages 16F sont respectivement repérés par des hachures obliques mixtes, des hachures obliques larges et des hachures obliques doubles en fonction de l'étape de remplacement au cours de laquelle elles ont été introduites.

Ainsi, lors du cycle à l'équilibre au plutonium (fig. 12), le coeur est entièrement chargé d'assemblages 16F, c'est-à-dire d'assemblages d'équilibre au plutonium.

Le procédé décrit précédemment permet de démarrer le réacteur 1 et d'atteindre un cycle d'équilibre avec un coeur chargé à 100% en assemblages MOX et cela avec des coûts réduits par rapport au démarrage direct d'un coeur chargé à 100% en assemblages MOX. En effet, cela permet de réduire le nombre d'assemblages MOX déchargés au cours des cycles de transition sans avoir été soumis à un épuisement complet, assemblages dont le coût est nettement plus élevé que celui des assemblages $UO_2$.

Ce procédé n'a été décrit qu'à titre d'exemple et de nombreux aspects peuvent changer d'une variante de ce procédé à l'autre, notamment concernant les assemblages de combustible nucléaire qui peuvent être introduits lors des étapes de remplacement. En particulier, d'autres assemblages de combustible nucléaire que ceux décrits précédemment peuvent être utilisés.

A titre d'exemple, dans le cycle initial, le coeur 2 peut être chargé uniquement d'assemblages de combustible nucléaire $UO_2$. Il est ensuite possible, par exemple, en utilisant des assemblages de combustible nucléaire 16D, 16E et 16F d'atteindre un cycle d'équilibre avec un coeur chargé à 100% en assemblages MOX.

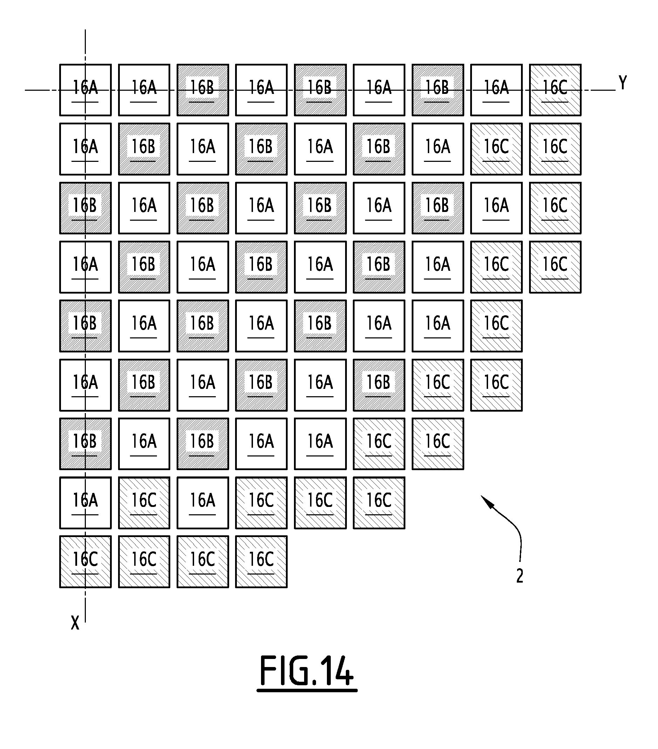

La figure 14 illustre un tel cycle initial où le coeur est chargé d'assemblages initiaux 16A, 16B et 16C tels que ceux décrits précédemment en regard de la figure 8. Contrairement au cas de la figure 8, le nombre d'assemblages 16C est de 72.

La montée à l'équilibre 100% MOX peut être réalisée de façon analogue à ce qui a été décrit précédemment avec, avant un premier cycle de transition, le remplacement de la plupart des assemblages de combustible nucléaire 16A et de quelques assemblages de combustible nucléaire 16B par des assemblages de combustible nucléaire 16D pour obtenir un coeur 2 similaire à celui de la figure 8, avec des localisations respectives des assemblages dans le coeur et des teneurs et enrichissements éventuellement adaptés. La suite de la montée à l'équilibre 100% MOX est réalisée de manière analogue à ce qui a été décrit précédemment avec si nécessaire des ajustements du nombre et des positions des assemblages dans le coeur et des ajustements d'enrichissements et de teneurs.

Il peut être également souhaitable de passer d'une exploitation du coeur 2 chargé à 100% en assemblages MOX, à une exploitation où le coeur 2 est chargé à 100% en assemblages $UO_2$ ou avec un mélange d'assemblages $UO_2$ et d'assemblages MOX. Pour cela, on peut avantageusement utiliser des assemblages de combustible nucléaire 16G de transition tel que celui illustré par la figure 15.

Cet assemblage 16G a une configuration zonée et comprend :

- dans sa zone centrale 80 des crayons de combustible nucléaire 24 ne renfermant, avant irradiation, que de l'oxyde d'uranium et pas d'oxyde de plutonium, c'est-à-dire du combustible $UO_2$, et
- dans sa zone périphérique 81 s'étendant le long des faces extérieures 82 de l'assemblage 16G et notamment dans ses coins 84, des crayons de combustible nucléaire 24 contenant, avant irradiation, du combustible à base d'oxyde mixte d'uranium et de plutonium, c'est-à-dire du combustible MOX.

La zone périphérique 81 correspond à la couche extérieure de crayons de combustible nucléaire 24.

Typiquement, les crayons de combustible nucléaire 24 de la zone périphérique 81 ont une teneur nominale en isotopes fissiles t inférieure à celle des assemblages de combustible nucléaire 16 d'équilibre au plutonium présents dans le coeur 2 avant la transition, par exemple les assemblages 16F.

Dans certaines variantes, la zone centrale 80 peut contenir des crayons 24 contenant avant irradiation un poison neutronique consommable.

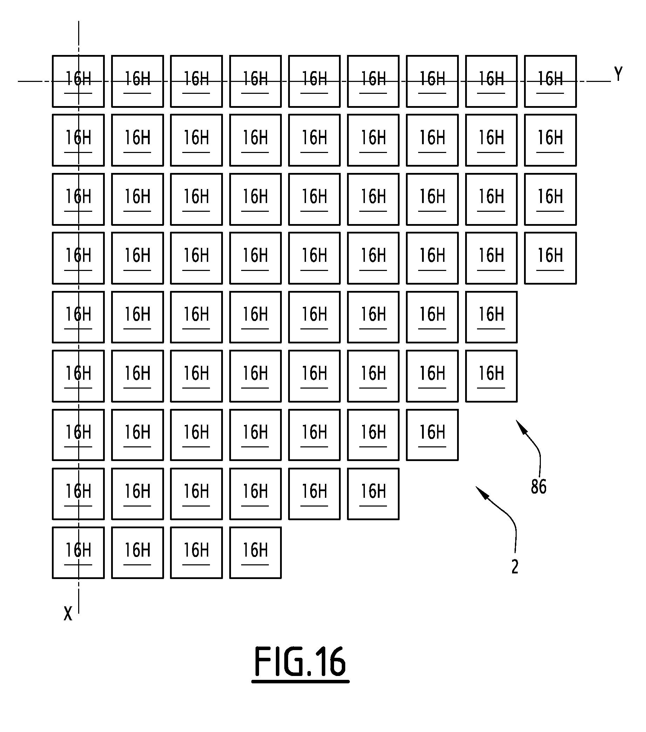

On va ainsi décrire par la suite un procédé d'exploitation du réacteur nucléaire permettant de passer d'un cycle d'équilibre au plutonium, dans lequel le coeur 2 est par exemple chargé à 100% d'assemblages de combustible nucléaire MOX tels que les assemblages 16F décrits précédemment, à un cycle d'équilibre à l'uranium, dans lequel le coeur 2 est chargé à titre d'exemple à 100% d'assemblages $UO_2$ 16H (Fig. 16).

Dans une étape de remplacement précédant un premier cycle de transition, on retire des assemblages MOX 16F d'équilibre au plutonium et on introduit par exemple 81 assemblages de combustible nucléaire 16G de transition. Les crayons 24 de la zone centrale 80 des assemblages 16G peuvent avoir un enrichissement en masse de 4,0% en uranium 235 et certains crayons 24 de cette zone peuvent contenir un poison neutronique consommable, par exemple de l'oxyde de gadolinium généralement avec un enrichissement en uranium 235 de l'oxyde d'uranium support inférieur à celui des crayons 24 non empoisonnés, par exemple un enrichissement de 2% en masse. L'enrichissement en uranium 235 des crayons de la zone centrale 80 est généralement différent et plus faible que celui des crayons des assemblages 16H. Les crayons de la zone périphérique 81 ont de préférence une teneur massique totale nominale en plutonium inférieure à la moitié de celle des assemblages MOX 16F d'équilibre au plutonium.

Les assemblages 16G de transition sont par exemple introduits dans la couche d'assemblages 88 immédiatement adjacente à la couche périphérique extérieure d'assemblages 86 du coeur 2, et plus au centre du coeur 2, mais pas dans la couche périphérique extérieure 86.

Après avoir fait fonctionner le réacteur 1 pendant le premier cycle de transition, on retire 80 assemblages MOX 16F d'équilibre au plutonium.

On charge alors 80 assemblages de combustible nucléaire 16G de transition qui se distinguent de ceux décrits précédemment par le fait que l'enrichissement en uranium 235 des crayons de la zone centrale 80 n'est pas nécessairement identique à celui des assemblages 16G précédents ni à celui des crayons 24 des assemblages 16H. Cet enrichissement peut par exemple être ajusté pour répondre aux besoins de l'exploitant notamment en longueur de cycle. Cependant pour atteindre plus rapidement l'équilibre les assemblages 16G chargés avant le deuxième cycle de transition ont de préférence un enrichissement en uranium 235 similaire à celui des assemblages 16H. Ces assemblages 16G de transition sont par exemple chargés en évitant la couche périphérique extérieure d'assemblages 86 du coeur 2. On fait alors fonctionner le réacteur 1 pendant un deuxième cycle de transition.

Puis, dans l'étape de remplacement précédant un troisième cycle de transition, on va remplacer les derniers assemblages MOX 16F d'équilibre au plutonium restants par 80 assemblages $UO_2$ 16H avec un enrichissement en uranium 235 par exemple de 4,95% en masse. Ces derniers assemblages 16H, qui sont des assemblages de combustible nucléaire d'équilibre à l'uranium ne contiennent que des crayons $UO_2$ dont certains contiennent éventuellement un poison neutronique consommable.

Le procédé va encore comprendre si nécessaire deux cycles de transition dans lesquels on remplace les assemblages 16G de transition résiduels introduits précédemment par des assemblages de combustible nucléaire d'équilibre à l'uranium afin d'atteindre un coeur 2 chargé à 100% en assemblages UO$_2$, avec par exemple un enrichissement en uranium 235 de 4,95% en masse

Le procédé d'exploitation décrit précédemment pour passer d'un cycle d'équilibre au plutonium à un cycle d'équilibre à l'uranium permet d'assurer une telle transition de manière économique, tout en limitant les risques d'endommagement des assemblages de combustible nucléaire, et notamment les risques d'endommagement des crayons de combustible nucléaire 24 contenant du combustible MOX.

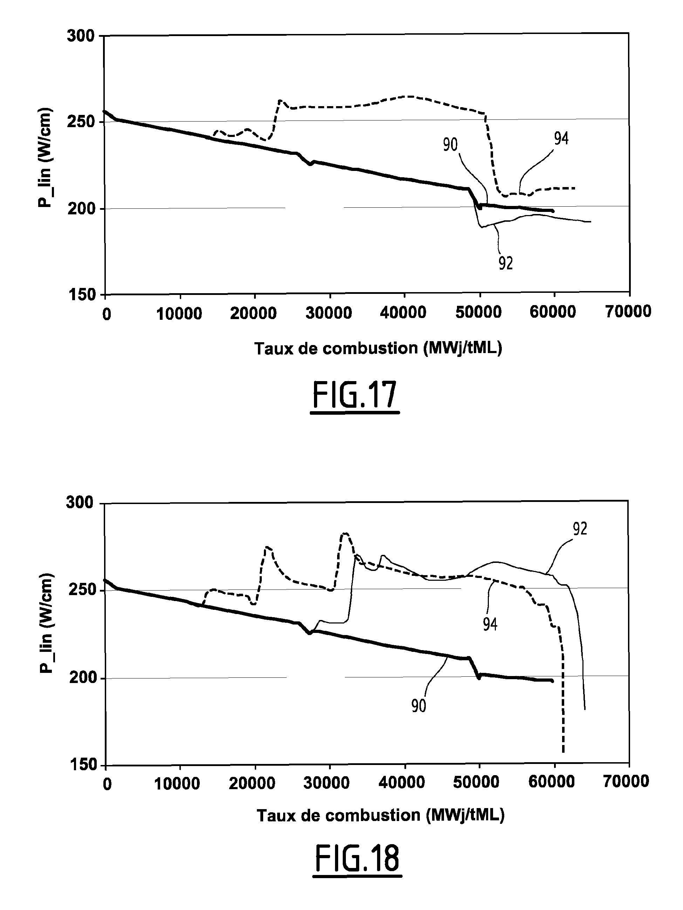

Ainsi, la figure 17 illustre la puissance linéique maximale vue par les crayons de combustible nucléaire 24 des assemblages MOX déchargés respectivement dans l'étape de remplacement précédant le premier cycle de transition (courbe 90), dans l'étape de remplacement précédant le deuxième cycle de transition (courbe 92) et dans l'étape de remplacement précédant le troisième cycle de transition (courbe 94).

La figure 18 représente les mêmes courbes, obtenues non pas en utilisant des assemblages 16G de transition tels que ceux de la figure 15, mais en remplaçant simplement les assemblages MOX par des assemblages UO$_2$.

Comme on peut le constater, notamment pour les courbes 92 et 94, des valeurs plus faibles de puissance linéique sont atteintes notamment pour les taux de combustion importants, en particulier au-delà de 50 GWj/tML lorsque l'on utilise des assemblages 16G de transition.

Ainsi, le relâchement de gaz de fission en dehors des pastilles en fin de vie est notablement réduit du fait que les puissances linéiques des crayons de combustible 24 sont fortement diminuées pour les taux de combustion importants. La transition peut donc être assurée en toute sécurité.

Ce procédé d'exploitation, qui permet de passer d'un cycle d'équilibre au plutonium à un cycle d'équilibre à l'uranium, ne permet pas en lui-même d'utiliser plus de plutonium dans un réacteur, mais il est utile à cette fin. En effet, un exploitant de centrale nucléaire peut souhaiter, pour utiliser un coeur chargé à 100% en assemblages MOX et donc consommer plus de plutonium, disposer d'une solution permettant de revenir à une exploitation plus classique avec des assemblages UO$_2$.

Ce procédé n'a été décrit qu'à titre d'exemple et de nombreux aspects peuvent varier d'une variante de ce procédé à l'autre.

Ainsi, des assemblages de combustible nucléaire de transition 16G peuvent n'être introduits que dans une étape de remplacement, leurs zones centrales 80 peuvent comprendre des crayons 24 contenant du combustible MOX...

Les procédés d'exploitation décrits précédemment et permettant d'une part de passer d'un cycle d'équilibre au plutonium à un cycle d'équilibre à l'uranium, et d'autre part, d'atteindre un cycle d'équilibre au plutonium peuvent être utilisés indépendamment l'un de l'autre et indépendamment des caractéristiques décrites ci-dessus pour le réacteur 1. Ils peuvent en outre être utilisés avec des cycles d'équilibre au plutonium dans lesquels le coeur n'est pas chargé à 100% d'assemblages MOX et avec des cycles d'équilibre à l'uranium dans lesquels le coeur 2 n'est pas chargé à 100% d'assemblages UO$_2$.

## Revendications

1. Procédé d'exploitation d'un réacteur nucléaire (1) à eau pressurisée comprenant un coeur (2) renfermant des assemblages (16) de combustible nucléaire comprenant des crayons de combustible nucléaire (24), le procédé comprenant des étapes consistant à faire fonctionner le réacteur nucléaire (1) pendant des cycles successifs avec, entre chaque cycle, des étapes de remplacement d'assemblages de combustible nucléaire usés par des assemblages de combustible nucléaire frais, procédé dans lequel:

   - on fait fonctionner le réacteur (1) pendant un cycle initial de démarrage du réacteur nucléaire au cours duquel le coeur (2) contient des assemblages de combustible nucléaire (16A, 16B, 16C, 16D) initiaux, certains au moins des assemblages de combustible nucléaire (16A, 16B, 16C) initiaux ne comportant que des crayons de combustible nucléaire (24) qui, avant irradiation, contiennent de l'oxyde d'uranium mais ne contiennent pas d'oxyde de plutonium, puis
   - on fait fonctionner le réacteur (1) pendant des cycles de transition, certains au moins des assemblages de combustible nucléaire (16A, 16B, 16C, 16D) initiaux étant remplacés progressivement, au cours des étapes de remplacement précédant les cycles de transition, par des assemblages de combustible nucléaire (16E) de transition ou par des assemblages de combustible nucléaire (16F) d'équilibre au plutonium, les assemblages de combustible nucléaire (16F) d'équilibre au plutonium ne comportant, avant irradiation, que des crayons (24) de combustible nucléaire exclusivement à base d'oxyde mixte d'uranium et de plutonium, et, pour chaque assemblage de combustible nucléaire (16F) d'équilibre au plutonium, les crayons de combustible nucléaire (24) ont la même composition isotopique de combustible nucléaire et la même teneur massique totale nominale en plutonium, puis

- on fait fonctionner le réacteur nucléaire (1) pendant au moins un cycle d'équilibre au plutonium au cours duquel le coeur (2) ne contient que des assemblages de combustible nucléaire (16F) d'équilibre au plutonium.

2. Procédé selon la revendication 1, dans lequel certains au moins des assemblages de combustible nucléaire (16E) de transition comprennent des crayons de combustible nucléaire (24) empoisonnés, les crayons de combustible nucléaire (24) empoisonnés contenant, avant irradiation, au moins un poison neutronique consommable.

3. Procédé selon la revendication 2, dans lequel certains au moins des crayons de combustible nucléaire (24) empoisonnés ne contiennent pas, avant irradiation, de plutonium.

4. Procédé selon l'une quelconque des revendications précédentes, dans lequel les crayons de combustible nucléaire (24) de certains au moins des assemblages de combustible nucléaire (16D) initiaux ont, avant irradiation, des teneurs nominales en isotopes fissiles du plutonium inférieures à celles des crayons de combustible nucléaire (24) des assemblages de combustible nucléaire (16F) d'équilibre au plutonium.

5. Procédé selon l'une quelconque des revendications précédentes, dans lequel certains au moins des assemblages de combustible nucléaire (16E) de transition comportent des crayons de combustible nucléaire (24) qui, avant irradiation, contiennent de l'oxyde d'uranium mais ne contiennent pas d'oxyde de plutonium.

6. Procédé selon l'une quelconque des revendications précédentes, dans lequel, au moins au cours de l'étape de remplacement précédant un cycle de transition ou le cycle d'équilibre au plutonium, on remplace des assemblages de combustible nucléaire (16E) de transition par des assemblages de combustible nucléaire (16F) d'équilibre au plutonium.

7. Procédé selon l'une quelconque des revendications précédentes, dans lequel au moins certains assemblages de combustible nucléaire (16D) initiaux sont des assemblages de combustible nucléaire (16D) zonés dont des crayons de combustible nucléaire (24) contiennent, avant irradiation, de l'oxyde mixte d'uranium et de plutonium, ces assemblages de combustible nucléaire (16D) zonés comprenant chacun plusieurs zones (80, 82, 84) dans lesquelles les crayons de combustible nucléaires (24) ont, avant irradiation, des teneurs nominales en isotopes du plutonium différentes.

8. Procédé selon la revendication 7, dans lequel certains au moins des assemblages de combustible nucléaire (16D) zonés comprennent chacun :

- une première zone centrale (80) comprenant des crayons de combustible nucléaire (24) ayant une première teneur nominale en isotopes fissiles du plutonium,
- une deuxième zone (82) s'étendant le long de faces extérieures de l'assemblage de combustible nucléaire (16D) zoné et constituée de crayons de combustible nucléaire (24) ayant une deuxième teneur nominale en isotopes fissiles du plutonium strictement inférieure à la première teneur nominale en isotopes fissiles du plutonium, et éventuellement
- une troisième zone (84) disposée dans des coins de l'assemblage de combustible nucléaire (16D) zoné et constituée de crayons de combustible nucléaire (24) ayant une troisième teneur nominale en isotopes fissiles du plutonium strictement inférieure à la deuxième teneur nominale en isotopes fissiles du plutonium.

9. Procédé selon la revendication 7 ou 8, dans lequel, pendant le cycle initial de démarrage du réacteur nucléaire, les assemblages de combustible nucléaire (16D) zonés sont situés dans la couche périphérique extérieure (86) du coeur (2).

10. Procédé selon la revendication 9, dans lequel, au cours de l'étape de remplacement précédant un premier cycle de transition, on charge des assemblages de combustible nucléaire (16E) de transition dans la couche (88) immédiatement adjacente à la couche périphérique extérieure (86) du coeur (2).

11. Procédé selon la revendication 9 ou 10, dans lequel des assemblages de combustible nucléaire (16E) de transition chargés au cours de l'étape de remplacement précédant un premier cycle de transition comportent des crayons de combustible nucléaire (24) qui, avant irradiation, contiennent de l'oxyde d'uranium mais ne contiennent pas d'oxyde de plutonium.

**12.** Procédé selon la revendication 10 ou 11, dans lequel, au cours de l'étape de remplacement précédant le premier cycle de transition, on déplace les assemblages de combustible nucléaire (16D) zonés immédiatement à l'intérieur de la couche située immédiatement à l'intérieur à la couche périphérique extérieure du coeur (2).

**13.** Procédé selon l'une des revendications 10 à 12, dans lequel, au cours des étapes de remplacement précédant le premier cycle de transition, un deuxième cycle de transition, un troisième cycle de transition et le cycle d'équilibre, on charge des assemblages de combustible nucléaire (16F) d'équilibre au plutonium.

**14.** Procédé selon l'une quelconque des revendications précédentes, dans lequel, dans le cycle initial de démarrage du réacteur nucléaire, tous les crayons de combustible nucléaire (24) des assemblages de combustible nucléaire (16A, 16B, 16C) initiaux, avant irradiation, contiennent de l'oxyde d'uranium mais ne contiennent pas d'oxyde de plutonium.

**15.** Procédé selon l'une des revendications précédentes, dans lequel, dans le cycle d'équilibre au plutonium, les crayons de combustible nucléaire (24) de tous les assemblages de combustible nucléaire (16F) d'équilibre au plutonium ont la même composition isotopique de combustible nucléaire et la même teneur massique totale nominale en plutonium.

**Patentansprüche**

**1.** Verfahren für den Betrieb eines Druckwasserskernreaktors (1), der einen Kern (2) umfasst, der Kernbrennstoffanordnungen (16) umschließt, die Kernbrennstäbe (14) umfassen, wobei das Verfahren Schritte umfasst, die darin bestehen, den Kernreaktor (1) während aufeinanderfolgender Zyklen zwischen jedem Zyklus mit Schritten zum Ersetzen von abgenutzten Kernbrennstoffanordnungen durch frische Kernbrennstoffanordnungen zu betreiben, wobei bei dem Verfahren:

- der Reaktor (1) während eines Anfangszyklus des Anfahrens des Reaktors betrieben wird, bei dem der Kern (2) ursprüngliche Kernbrennstoffanordnungen (16A, 16B, 16C, 16D) enthält, wobei mindestens einige der ursprünglichen Kernbrennstoffanordnungen (16A, 16B, 16C) nur Kernbrennstäbe (24) aufweisen, die vor Bestrahlung Uranoxid enthalten, aber kein Plutoniumoxid enthalten, dann
- der Reaktor (1) während Übergangszyklen betrieben wird, bei denen mindestens einige der ursprünglichen Kernbrennstoffanordnungen (16A, 16B, 16C, 16D) allmählich während der Schritte des Ersetzens, die den Übergangszyklen vorangestellt sind, durch Übergangskernbrennstoffanordnungen (16E) oder durch Kernbrennstoffanordnungen (16F) mit Plutoniumgleichgewicht ersetzt werden, wobei die Kernbrennstoffanordnungen (16F) mit Plutoniumgleichgewicht vor Bestrahlung nur Kernbrennstäbe ausschließlich auf der Basis eines Mischoxid des Urans und Plutoniums aufweisen und für jede Kernbrennstoffanordnung (16F) mit Plutoniumgleichgewicht die Kernbrennstäbe (24) die gleiche Kernbrennstoff-Isotopenzusammensetzung und den gleichen nominalen Gesamtmassengehalt an Plutonium aufweisen, dann
- der Kernreaktor (1) während mindestens eines Plutoniumgleichgewichtszyklus betrieben wird, während dessen der Kern (2) nur Kernbrennstoffanordnungen (16F) mit Plutoniumgleichgewicht enthält.

**2.** Verfahren nach Anspruch 1, bei dem mindestens einige der Übergangskernbrennstoffanordnungen (16E) vergiftete Kernbrennstäbe (24) umfassen, wobei die vergifteten Kernbrennstäbe (24) vor Bestrahlung mindestens ein brennbares Neutronengift enthalten.

**3.** Verfahren nach Anspruch 2, bei dem mindestens einige der vergifteten Kernbrennstäbe (24) vor Bestrahlung kein Plutonium enthalten.

**4.** Verfahren nach einem beliebigen der vorhergehenden Ansprüche, bei dem die Kernbrennstäbe (24) von mindestens einigen der ursprünglichen Kernbrennstoffanordnungen (16D) vor Bestrahlung Nominalgehalte an spaltbaren Plutoniumisotopen geringer als diejenigen der Kernbrennstäbe (24) der Kernbrennstoffanordnungen (16F) mit Plutoniumgleichgewicht aufweisen.

**5.** Verfahren nach einem beliebigen der vorhergehenden Ansprüche, bei dem mindestens einige der Übergangskernbrennstoffanordnungen (16E) Kernbrennstäbe (24) aufweisen, die vor Bestrahlung Uranoxid, aber kein Plutoniumoxid enthalten.

**6.** Verfahren nach einem beliebigen der vorhergehenden Ansprüche, bei dem mindestens während des Schritts des Ersetzens, der einem Übergangszyklus oder dem Plutoniumgleichgewichtzyklus vorangestellt ist, Übergangskernbrennstoffanordnungen (16E) durch Plutoniumgleichgewichts-Kernbrennstoffanordnungen (16F) ersetzt werden.

7. Verfahren nach einem beliebigen der vorhergehenden Ansprüche, bei dem mindestens einige der ursprünglichen Kernbrennstoffanordnungen (16D) zonierte Kernbrennstoffanordnungen (16D) sind, deren Kernbrennstäbe (24) vor Bestrahlung Mischoxide des Urans und Plutoniums enthalten, wobei diese zonierten Kernbrennstoffanordnungen (16D) jeweils mehrere Zonen (80, 82, 84) umfassen, in denen die Kernbrennstäbe (24) vor Bestrahlung unterschiedliche Nominalgehalte an Plutoniumisotopen aufweisen.

8. Verfahren nach Anspruch 7, bei dem mindestens einige der zonierten Kernbrennstoffanordnungen jeweils umfassen:

- eine erste zentrale Zone (80), die Kernbrennstäbe (24) umfasst, die einen ersten Nominalgehalt an spaltbaren Plutoniumisotopen aufweisen,
- eine zweite Zone (82), die sich entlang von Außenflächen der zonierten Kernbrennstoffanordnung (16D) erstreckt und die aus Kernbrennstäben (24) gebildet wird, die einen zweiten Nominalgehalt an spaltbaren Plutoniumisotopen streng kleiner als der erste Nominalgehalt an spaltbaren Plutoniumisotopen aufweisen, und gegebenenfalls
- eine dritte Zone (84), die an den Ecken der zonierten Kernbrennstoffanordnung (16D) angeordnet ist und aus Kernbrennstäben (24) gebildet wird, die einen dritten Nominalgehalt an spaltbaren Plutoniumisotopen streng kleiner als der zweite Nominalgehalt an spaltbaren Plutoniumisotopen aufweisen.

9. Verfahren nach Anspruch 7 oder 8, bei dem während des Anfangszyklus des Anfahrens des Kernreaktors die zonierten Kernbrennstoffanordnungen (16D) in der äußeren Umfangsschicht (86) des Kerns (2) angeordnet sind.

10. Verfahren nach Anspruch 9, bei dem während des Schritts des Ersetzens, der einem ersten Übergangszyklus vorangestellt ist, die Übergangskernbrennstoffanordnungen (16E) in der Schicht (88) unmittelbar benachbart zur äußeren Umfangsschicht (86) des Kerns (2) geladen werden.

11. Verfahren nach Anspruch 9 oder 10, bei dem die Übergangskernbrennstoffanordnungen (16E), die während des Schritts des Ersetzens, der einem ersten Übergangszyklus vorangestellt ist, geladen werden, Kernbrennstäbe (24) aufweisen, die vor Bestrahlung Uranoxid, aber kein Plutoniumoxid enthalten.

12. Verfahren nach Anspruch 10 oder 11, bei dem während des dem ersten Übergangszyklus vorangestellten Schritts des Ersetzens die zonierten Kernbrennstoffanordnungen (16D) sofort in das Innere der Schicht bewegt werden, die unmittelbar im Inneren der äußeren Umfangsschicht des Kerns (2) angeordnet ist.

13. Verfahren nach einem der Ansprüche 10 bis 12, bei dem während der Schritte des Ersetzens, die dem ersten Übergangszyklus, einem zweiten Übergangszyklus, einem dritten Übergangszyklus und dem Gleichgewichtszyklus vorangestellt sind, die Kernbrennstoffanordnungen (16F) mit Plutoniumgleichgewicht geladen werden.

14. Verfahren nach einem beliebigen der vorhergehenden Ansprüche, bei dem in dem Anfangszyklus des Anfahrens des Kernreaktors alle Kernbrennstäbe (24) der ursprünglichen Kernbrennstoffanordnungen (16A, 16B, 16C) vor Bestrahlung das Uranoxid, aber kein Plutoniumoxid enthalten.

15. Verfahren nach einem der vorhergehenden Ansprüche, bei dem in dem Plutoniumgleichgewichtszyklus die Kernbrennstäbe (24) aller Kernbrennstoffanordnungen (16F) mit Plutoniumgleichgewicht die gleiche Kernbrennstoff-Isotopenzusammensetzung und den gleichen nominalen Gesamtmassengehalt an Plutonium aufweisen.

## Claims

1. A method for operating a pressurized water nuclear reactor (1) comprising a core (2) containing nuclear fuel assemblies (16) comprising nuclear fuel rods (24), the method comprising steps consisting of operating the nuclear reactor (1) for successive cycles with, between each cycle, steps for replacing spent nuclear fuel assemblies with fresh nuclear fuel assemblies, a method wherein:

- the reactor (1) is operated for an initial cycle for starting the nuclear reactor during which the core (2) contains initial nuclear fuel assemblies (16A, 16B, 16C,16D), at least some of the initial nuclear fuel assemblies (16A, 16B, 16C) only comprising nuclear fuel rods (24) which, before irradiation, contain uranium oxide but do not contain any plutonium oxide, and then
- the reactor (1) is operated for transition cycles, at least some of the initial nuclear fuel assemblies (16A, 16B, 16C, 16D) being progressively replaced, during the replacement steps preceding the transition cycles, with transition nuclear fuel assemblies (16E) or with plutonium-equilibrium nuclear fuel assemblies (16F), the plutonium-equilibrium nuclear fuel assemblies (16F) only comprising, before irradiation, nuclear fuel rods (24) exclusively based on uranium and plutonium mixed oxide, and for each plutonium-equilibrium nuclear fuel assembly (16F), the nuclear fuel rods (24) have the same nuclear fuel isotope composition and the same nominal total plutonium mass content, and then
- the nuclear reactor (1) is operated for at least one plutonium-equilibrium cycle during which the core (2) only contains plutonium-equilibrium nuclear fuel assemblies (16F).

2. The method according to claim 1, wherein at least some of the transition nuclear fuel assemblies (16E) comprise poisoned nuclear fuel rods (24), the poisoned nuclear fuel rods (24) containing before irradiation at least one consumable neutron poison.

3. The method according to claim 2, wherein at least some of the poisoned nuclear fuel rods (24) do not contain, before irradiation, any plutonium.

4. The method according to any of the preceding claims, wherein the nuclear fuel rods (24) of at least some of the initial nuclear fuel assemblies (16D) have, before irradiation, nominal plutonium fissile isotope contents less than those of the nuclear fuel rods (24) of the plutonium-equilibrium nuclear fuel assemblies (16F).

5. The method according to any of the preceding claims, wherein at least some of the transition nuclear fuel assemblies (16E) comprise nuclear fuel rods (24) which, before irradiation contain uranium oxide but do not contain any plutonium oxide.

6. The method according to any of the preceding claims, wherein, at least during the replacement step preceding a transition cycle or the plutonium-equilibrium cycle, transition nuclear fuel assemblies (16E) are replaced with plutonium-equilibrium nuclear fuel assemblies (16F).

7. The method according to any of the preceding claims, wherein at least some initial nuclear fuel assemblies (16D) are zoned nuclear fuel assemblies (16D), the nuclear fuel rods (24) of which contain, before irradiation, uranium and plutonium mixed oxide, these zoned nuclear fuel assemblies (16D) each comprising several zones (80, 82, 84) in which the nuclear fuel rods (24) have, before irradiation, different nominal plutonium isotope contents.

8. The method according to claim 7, wherein at least some of the zoned nuclear fuel assemblies (16D) each comprise:

- a first central zone (80) comprising nuclear fuel rods (24) having a first nominal plutonium fissile isotope content,
- a second zone (82) extending along outer faces of the zoned nuclear fuel assembly (16D) and consisting of nuclear fuel rods (24) having a second nominal plutonium fissile isotope content strictly less than the first nominal plutonium fissile isotope content, and optionally
- a third zone (84) positioned in corners of the zoned nuclear fuel assembly (16D) and consisting of nuclear fuel rods (24) having a third nominal plutonium fissile isotope content strictly less than the second nominal plutonium fissile isotope content.

9. The method according claims 7 or 8, wherein, during the initial cycle for starting the nuclear reactor, the zoned nuclear fuel assemblies (16D) are located in the outer peripheral layer (86) of the core (2).

10. The method according to claim 9, wherein, during the replacement step preceding a first transition cycle, transition nuclear fuel assemblies (16E) are loaded into the layer (88) immediately adjacent to the outer peripheral layer (86) of the core (2).

11. The method according to claim 9 or 10, wherein transition nuclear fuel assemblies (16E) loaded during the replacement step preceding a first transition cycle comprise nuclear fuel rods (24) which, before irradiation, contain uranium oxide but do not contain any plutonium oxide.

12. The method according to claims 10 or 11, wherein, during the replacement step preceding the first transition cycle, the zoned nuclear fuel assemblies (16D) are displaced immediately inside the layer located immediately inside the outer peripheral layer of the core (2).

13. The method according to one of claims 10 to 12, wherein, during the replacement steps preceding the first transition cycle, a second transition cycle, a third transition cycle and the equilibrium cycle, plutonium-equilibrium nuclear fuel assemblies (16F) are loaded.

14. The method according to any of the preceding claims, wherein, in the initial cycle for starting the nuclear reactor, all the nuclear fuel rods (24) of the initial nuclear fuel assemblies (16A, 16B, 16C), before irradiation, contain uranium oxide but do not contain any plutonium oxide.

15. The method according to one of the preceding claims, wherein in the plutonium-equilibrium cycle, the nuclear fuel rods (24) of all the plutonium-equilibrium nuclear fuel assemblies (16F) have the same nuclear fuel isotope composition and the same nominal total plutonium mass content.

FIG.1

EP 2 462 592 B1

FIG.2

19

FIG.3

FIG.4

FIG.5

FIG.7

FIG.6

**FIG.8**

## FIG.9

FIG.10

EP 2 462 592 B1

FIG.11

27

FIG.12

FIG.13

FIG.15

| 16A | 16A | 16B | 16A | 16B | 16A | 16B | 16A | 16C |
|-----|-----|-----|-----|-----|-----|-----|-----|-----|
| 16A | 16B | 16A | 16B | 16A | 16B | 16A | 16C | 16C |
| 16B | 16A | 16B | 16A | 16B | 16A | 16B | 16A | 16C |
| 16A | 16B | 16A | 16B | 16A | 16B | 16A | 16C | 16C |
| 16B | 16A | 16B | 16A | 16B | 16A | 16A | 16C |     |
| 16A | 16B | 16A | 16B | 16A | 16B | 16C | 16C |     |
| 16B | 16A | 16B | 16A | 16A | 16C | 16C |     |     |
| 16A | 16C | 16A | 16C | 16C | 16C |     |     |     |
| 16C | 16C | 16C | 16C |     |     |     |     |     |

Y

X

2

# FIG.14

**FIG.16**

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2693023 A
- US 6233302 B

- FR 2864322

**Littérature non-brevet citée dans la description**

- A plutonium-fueled high-moderated pressurized water reactor for the next century. **BARBAULT P.** Nuclear science and engineering. Academic press, 01 Février 1996, vol. 122, 240-246
- Advanced fuels for plutonium management in pressurized water reactors. **VASILE et al.** Journal of nuclear materials. Elsevier BV, 01 Juin 2003, vol. 319, 173-179

- Plutonium recycling in a full MOX 900 MW (electric) PWR : physical analysis of accident behaviour. **ANIEL BUCHHEIT S et al.** Nuclear Technology. Américain nuclear society, 01 Novembre 1999, vol. 128, 245-256
- **HYUNG-KOOK JOE et al.** Feasability study on the utilization of mixed oxide fuel in Korean 900MWe PWR core through conceptual nuclear core design and analysis. *Journal of the Korean Nuclear Society,* 01 Août 1997, vol. 29 (4), 299-309